# EUROPÄISCHE PATENTANMELDUNG

(11) **EP 3 540 347 A1**
(43) Veröffentlichungstag der Anmeldung: **18.09.2019**
(21) Anmeldenummer: 19160460.2
(22) Anmeldetag: 04.03.2019
(51) Int. Cl.: F26B 3/04, F26B 21/02, F26B 21/08, F26B 21/10, F26B 23/00

(54) **KONDITIONIERVORRICHTUNG, BEHANDLUNGSANLAGE MIT EINER KONDITIONIERVORRICHTUNG UND VERFAHREN ZU BETREIBEN EINER KONDITIONIERVORRICHTUNG**

(30) Priorität: 13.03.2018 DE 102018105722
(71) Anmelder: Eisenmann SE, 71032 Böblingen (DE)
(72) Erfinder: Rauser, Wolfgang, 72224 Ebhausen (DE)
(74) Vertreter: Ostertag & Partner Patentanwälte mbB

(57) **Zusammenfassung**

Eine Konditioniervorrichtung (10) zum Konditionieren eines gasförmigen Mediums zu einem konditionierten gasförmigen Prozessmedium umfasst eine Eingangs-Anschlusseinrichtung (48) und eine Ausgangs-Anschlusseinrichtung (50), zwischen denen ein Strömungsweg für gasförmiges Medium (12) mit wenigstens einer Heizeinrichtung (60.4) ausgebildet ist, mittels welcher das gasförmige Medium (12) erwärmbar ist. Die Heizeinrichtung (60.4) ist derart mit einem Verbrennungsmotor-Wärmepumpensystem (92) mit wenigstens einem Verbrennungsmotor (96) verbunden, dass die Abwärme des Verbrennungsmotors (96) zum Erwärmen des gasförmigen Mediums (12) nutzbar ist. Eine Anlage zum Behandeln von Werkstücken (24) umfasst eine solche Konditioniervorrichtung (10). Bei einem Verfahren zum Betreiben einer Konditioniervorrichtung (10) zum Konditionieren eines gasförmigen Mediums (12) zu einem konditionierten gasförmigen Prozessmedium (14), bei welchem die Konditioniereinrichtung eine Eingangs-Anschlusseinrichtung (48) und einer Ausgangs-Anschlusseinrichtung (50) umfasst, zwischen denen ein Strömungsweg für gasförmiges Medium (12) mit wenigstens einer Heizeinrichtung (60.4) ausgebildet ist, mittels welcher das gasförmige Medium (12) erwärmbar ist, nutzt die Heizeinrichtung (60.4) die Abwärme eines Verbrennungsmotors (96) eines Verbrennungsmotor-Wärmepumpensystems (92) zum Erwärmen des gasförmigen Mediums (12).

## Beschreibung

Die Erfindung betrifft eine Konditioniervorrichtung zum Konditionieren eines gasförmigen Mediums zu einem konditionierten gasförmigen Prozessmedium, mit einer Eingangs-Anschlusseinrichtung und einer Ausgangs-Anschlusseinrichtung, zwischen denen ein Strömungsweg für gasförmiges Medium mit wenigstens einer Heizeinrichtung ausgebildet ist, mittels welcher das gasförmige Medium erwärmbar ist.

Außerdem betrifft die Erfindung eine Anlage zum Behandeln von Werkstücken, insbesondere zum Trocknen oder Beschichten von Werkstücken, mit einer Konditioniervorrichtung zum Konditionieren eines gasförmigen Mediums zu einem konditionierten gasförmigen Prozessmedium.

Ferner betrifft die Erfindung ein Verfahren zum Betreiben einer Konditioniervorrichtung zum Konditionieren eines gasförmigen Mediums zu einem konditionierten gasförmigen Prozessmedium, mit einer Eingangs-Anschlusseinrichtung und einer Ausgangs-Anschlusseinrichtung, zwischen denen ein Strömungsweg für gasförmiges Medium mit wenigstens einer Heizeinrichtung ausgebildet ist, mittels welcher das gasförmige Medium erwärmbar ist.

Konditioniervorrichtungen der eingangs genannten Art werden zum Beispiel in der Automobilindustrie in Anlagen zum Behandeln von Fahrzeugkarosserien und dort insbesondere bei Behandlungskabinen eingesetzt, in denen beschichtete Fahrzeugkarosserien im Rahmen eines Lackierprozesses behandelt werden. Hierzu zählen insbesondere Trockner oder Beschichtungskabinen, aber auch zum Beispiel Abdunstkabinen oder Kühlkabinen, welche alle einen Behandlungstunnel aufweisen, in dem die entsprechende Behandlung erfolgt.

Bei solchen Behandlungskabinen wird die Tunnelluft umgewälzt und hierzu als zu konditionierendes gasförmiges Medium aus dem Behandlungstunnel abgeführt und nach einer Konditionierung in einer Konditioniervorrichtung dem Behandlungstunnel als konditioniertes Prozessmedium wieder zugeführt. Die Tunnelluft kann Bestandteile enthalten, die beim Behandeln der Werkstücke freigesetzt werden und die aus der Tunnelluft entfernt werden müssen. In einer Konditioniervorrichtung durchläuft die entnommene Tunnelluft unterschiedliche Konditionierungsstufen, in denen die Feuchtigkeit und Temperatur der Tunnelluft eingestellt werden und in denen gegebenenfalls auch aggressive Bestandteile entfernt werden können. Insbesondere bei Trocknern ist eine geringe Feuchte des konditionierten Prozessmediums wünschenswert.

Bei einem Entfeuchtungsprozess wird das gasförmige Medium meist in mehreren Stufen abgekühlt, wobei die Feuchtigkeit auskondensiert. In Regel wird das so entfeuchtete Medium in nachfolgenden Stufen wieder erwärmt, so dass das dann konditionierte Prozessgas möglichst dergleichen Temperatur in den Behandlungstunnel zurück geführt wird, mit welcher das gasförmige Medium aus dem Behandlungstunnel entnommen wurde.

Es ist nun Aufgabe der Erfindung, eine Konditioniervorrichtung, eine Anlage mit einer Konditioniervorrichtung und ein Verfahren zum Betreiben einer Konditioniervorrichtung Konditionieren eines gasförmigen Mediums sowie eine Anlage und ein Verfahren zum Behandeln von Werkstücken bereitzustellen, welche besonders energieeffizient betrieben werden kann.

Diese Aufgabe wird bei einer Konditioniervorrichtung der eingangs genannten Art dadurch gelöst, dass
die Heizeinrichtung derart mit einem Verbrennungsmotor-Wärmepumpensystem mit wenigstens einem Verbrennungsmotor verbunden ist, dass die Abwärme des Verbrennungsmotors zum Erwärmen des gasförmigen Mediums nutzbar ist.

Bei einem an und für sich bekannten Verbrennungsmotor-Wärmepumpensystem wird die Verdichtereinheit, d.h. der Verdichter bzw. Kompressor, der Wärmepumpe mit Hilfe eines Verbrennungsmotors betrieben. Vorzugsweise ist der Verbrennungsmotor ein Gasmotor. Mit Hilfe eines solchen Verbrennungsmotor-Wärmepumpensystems werden Wärmeträgermedien, allgemein ausgedrückt Arbeitsmedien, für Wärmetauscher abgekühlt oder erwärmt, so dass die Wärmetauscher zum temperieren, d.h. zum Abkühlen oder Erwärmen eines anderen, insbesondere gasförmigen Mediums, genutzt werden können. Dieses Medium kann beispielsweise das gasförmige Medium aus dem Behandlungstunnel einer Behandlungsanlage sein.

Erfindungsgemäß wurde erkannt, dass die Energiebilanz signifikant verbessert werden kann, wenn die zwangsläufig entstehende Abwärme des Verbrennungsmotors des Verbrennungsmotor-Wärmepumpensystems genutzt wird, um das gasförmige Medium zu erwärmen.

Als technisches Konzept hat es sich als vorteilhaft erwiesen, wenn ein Strömungskreislauf für ein Heiz-Arbeitsmedium vorgesehen ist, in welchem das Heiz-Arbeitsmedium zwischen wenigstens einem Heiz-Wärmetauscher der Heizeinrichtung und dem Verbrennungsmotor-Wärmepumpensystem zirkuliert, wobei die Abwärme des Verbrennungsmotors mittels eines Abwärme-Wärmetauschers auf das Heiz-Arbeitsmedium übertragen wird.

Es ist günstig, wenn der Strömungskreislauf eine Vorlaufleitung, die von dem Abwärme-Wärmetauscher zu dem Heiz-Wärmetauscher der Heizeinrichtung führt, und eine Rücklaufleitung zwischen dem Heiz-Wärmetauscher und dem Abwärme-Wärmetauscher umfasst, wobei die Vorlaufleitung und die Rücklaufleitung derart durch eine Zirkulationsleitung miteinander verbunden sind, dass Heiz-Arbeitsmedium aus der Vorlaufleitung im Kreislauf wieder in die Rücklaufleitung führbar ist. Auf diese Weise kann der Zufluss des Heiz-Arbeitsmediums zum Heiz-Wärmetauscher verändert werden.

Dabei geht die Zirkulationsleitung vorzugsweise stromauf des Heiz-Wärmetauschers von der Vorlaufleitung ab.

Vorteilhaft ist ein Ventil vorgesehen, durch welches der Anteil des Heiz-Arbeitsmediums einstellbar ist, der aus der Vorlaufleitung in die Rücklaufleitung strömt.

Besonders bevorzugt ist, dass
a) in dem Strömungsweg für gasförmiges Medium wenigstens eine Kühleinrichtung ausgebildet ist, mittels welcher das gasförmige Medium abkühlbar ist und welche insbesondere stromauf der Heizeinrichtung angeordnet ist;
b) die Kühleinrichtung derart mit dem Verbrennungsmotor-Wärmepumpensystem verbunden ist, dass ein durch das Verbrennungsmotor-Wärmepumpensystem abgekühltes Kühl-Arbeitsmedium zum Kühlen des gasförmigen Mediums nutzbar ist.

Auf diese Weise wird das Verbrennungsmotor-Wärmepumpensystem effektiv sowohl für die Abkühlung und die damit einhergehende Entfeuchtung des gasförmigen Mediums als auch für dessen Wiedererwärmung genutzt.

Als technischen Konzept ist es dabei vorteilhaft, dass ein Strömungskreislauf vorgesehen ist, in welchem das Kühl-Arbeitsmedium zwischen einem Kühl-Wärmetauschersystem der Kühleinrichtung, welches einen oder mehrere Kühl-Wärmetauscher umfasst, und dem Verbrennungsmotor-Wärmepumpensystem zirkuliert.

Bei der Kühleinrichtung kann es vorkommen, dass sich Eis bildet, welches für einen einwandfreien Betrieb der Konditioniervorrichtung entfernt werden muss. Daher ist es vorteilhaft, wenn die Kühleinrichtung eine Enteiseinrichtung umfasst, mittels welcher ein oder mehrere Kühl-Wärmetauscher des Kühl-Wärmetauschersystems selektiv enteisbar sind.

Vorzugsweise umfasst die Enteiseinrichtung eine Umwälzleitung, welche mit dem Strömungskreislauf für das Heiz-Arbeitsmedium verbunden ist und die zu einem oder mehreren Kühl-Wärmetauschern des Kühl-Wärmetauschersystems führt. Das Heiz-Arbeitsmedium wird als energieeffizient auch zum Enteisen der Kühlvorrichtung genutzt.

Für die effiziente Temperierung des gasförmigen Medium ist es von Vorteil, wenn im Strömungsweg des gasförmigen Mediums außerdem eine Vorkühleinrichtung ausgebildet ist, die stromauf der Heizeinrichtung und stromauf der Kühleinrichtung angeordnet ist, und/oder eine Vorwärmeinrichtung ausgebildet ist, die stromauf der Heizeinrichtung angeordnet ist, und/oder eine weitere Heizeinrichtung ausgebildet ist, die stromab der Heizeinrichtung angeordnet ist.

Bei der Anlage der eingangs genannten Art wird die oben angegebene Aufgabe dadurch gelöst, dass
die Konditioniervorrichtung eine Konditioniervorrichtung mit einigen oder allen der oben erläuterten Merkmale ist.

Bei dem Verfahren der eingangs genannten Art wird die oben angegebene Aufgabe dadurch gelöst, dass
die Heizeinrichtung die Abwärme eines Verbrennungsmotors eines Verbrennungsmotor-Wärmepumpensystems zum Erwärmen des gasförmigen Mediums nutzt.

Die Vorteile dieses Verfahrensmerkmals und der nachfolgend erläuterten Verfahrensmerkmale entsprechen den Vorteilen, die zu den jeweiligen Merkmalen der Konditioniervorrichtung erörtert wurden.

Dementsprechend wird vorteilhaft ein Heiz-Arbeitsmedium in einem Strömungskreislauf für das Heiz-Arbeitsmedium zwischen wenigstens einem Heiz-Wärmetauscher der Heizeinrichtung und dem Verbrennungsmotor-Wärmepumpensystem zirkuliert, wobei die Abwärme des Verbrennungsmotors mittels eines Abwärme-Wärmetauschers auf das Heiz-Arbeitsmedium übertragen wird.

Vorzugsweise umfasst der Strömungskreislauf eine Vorlaufleitung, die von dem Abwärme-Wärmetauscher zu dem Heiz-Wärmetauscher der Heizeinrichtung führt, und eine Rücklaufleitung zwischen dem Heiz-Wärmetauscher und dem Abwärme-Wärmetauscher umfasst, wobei die Vorlaufleitung und die Rücklaufleitung durch eine Zirkulationsleitung miteinander verbunden sind und Heiz-Arbeitsmedium aus der Vorlaufleitung im Kreislauf wieder in die Rücklaufleitung geführt wird.

Es ist günstig, wenn die Zirkulationsleitung stromauf des Heiz-Wärmetauschers von der Vorlaufleitung abgeht.

Von Vorteil ist es, wenn der Anteil des Heiz-Arbeitsmediums, der aus der Vorlaufleitung in die Rücklaufleitung strömt, mittels eines Ventils eingestellt wird.

Besonders ist vorzuziehen, dass
a) in dem Strömungsweg für gasförmiges Medium wenigstens eine Kühleinrichtung ausgebildet ist, mittels welcher das gasförmige Medium abgekühlt wird und welche insbesondere stromauf der Heizeinrichtung angeordnet ist;
b) die Kühleinrichtung mit dem Verbrennungsmotor-Wärmepumpensystem verbunden ist und ein durch das Verbrennungsmotor-Wärmepumpensystem abgekühltes Kühl-Arbeitsmedium zum Kühlen des gasförmigen Mediums genutzt wird.

Ferner ist es günstig, wenn das Kühl-Arbeitsmedium in einem Strömungskreislauf zwischen einem Kühl-Wärmetauschersystem der Kühleinrichtung, welches einen oder mehrere Kühl-Wärmetauscher umfasst, und dem Verbrennungsmotor-Wärmepumpensystem zirkuliert.

Vorzugsweise werden ein oder mehrere Kühl-Wärmetauscher des Kühl-Wärmetauschersystems mittels einer Enteiseinrichtung selektiv enteist.

Es ist vorteilhaft, wenn die Enteiseinrichtung eine Umwälzleitung umfasst, welche mit dem Strömungskreislauf für das Heiz-Arbeitsmedium verbunden ist und die zu einem oder mehreren Kühl-Wärmetauschern des Kühl-Wärmetauschersystems führt.

Außerdem ist es vorteilhaft, wenn das gasförmigen Mediums auf seinem Strömungsweg außerdem durch eine Vorkühleinrichtung vorgekühlt wird, die stromauf der Heizeinrichtung und stromauf der Kühleinrichtung angeordnet ist, und/oder durch eine Vorwärmeinrichtung vorgewärmt wird, die stromauf der Heizeinrichtung angeordnet ist, und/oder durch eine weitere Heizeinrichtung geheizt wird, die stromab der Heizeinrichtung angeordnet ist.

Nachfolgend werden Ausführungsbeispiele der Erfindung anhand der Zeichnungen näher erläutert. In diesen zeigen:
- Figur 1: einen Längsschnitt einer Behandlungseinrichtung zum Behandeln von Fahrzeugkarosserien mit einem Behandlungstunnel, dem mittels einer Konditioniervorrichtung mit mehrere Konditionierungsstufen gemäß einem ersten Ausführungsbeispiel konditionierte Prozessluft zugeführt wird;
- Figur 2: das erste Ausführungsbeispiel der Konditioniervorrichtung gemäß Figur 1, wobei schematisch ein Versorgungskreislauf der Konditionierungsstufen veranschaulicht ist;
- Figur 3: das erste Ausführungsbeispiel der Konditioniervorrichtung gemäß Figur 1, wobei schematisch ein zweites Versorgungslayout der Konditionierungsstufen veranschaulicht ist;
- Figur 4: ein zweites Ausführungsbeispiel der Konditioniervorrichtung mit einem Versorgungslayout

In den Figuren bezeichnet 10 eine Konditioniervorrichtung zum Konditionieren eines gasförmigen Mediums 12 zu einem konditionierten gasförmigen Prozessmedium 14.

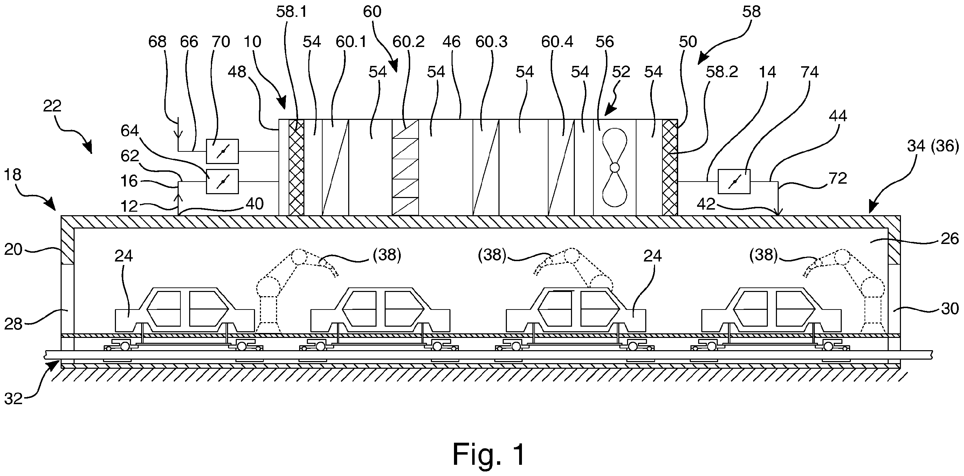

Ein solches gasförmiges Medium 12 kann beispielsweise ein Abgas enthalten, welches bei einem Arbeitsprozess entsteht. Bei den nachfolgend beschriebenen Ausführungsbeispielen ist das gasförmige Medium 12 beispielhaft zumindest teilweise Abluft 16, die in einer nur in Figur 1 gezeigten Behandlungseinrichtung 18 mit einer Behandlungskabine 20 einer insgesamt mit 22 bezeichneten Anlage zum Behandeln von Werkstücken 24 entsteht.

Als Beispiel für Werkstücke 24 sind jeweils Fahrzeugkarosserien gezeigt, worunter sowohl Karosserien von Personenkraftwagen und Lastkraftwagen einschließlich Fahrgastzellen zu verstehen sind. Bei den Werkstücken 24 kann es sich aber auch um andere Werkstücke und insbesondere um Anbau- oder Aufbauteile von Fahrzeugkarosserien wie Stoßfänger, Seitenspiegel oder dergleichen handeln. Kleinere Werkstücke 24 können gegebenenfalls auf einem nicht eigens gezeigten Werkstückträger angeordnet werden.

Die Behandlungskabine 20 der Behandlungseinrichtung 18 begrenzt einen Arbeitsraum in Form eines Behandlungstunnels 26 mit einem Tunneleingang 28 und einen Tunnelausgang 30, die gegebenenfalls als Eingangs- bzw. Ausgangsschleuse ausgebildet sein können, wie es an und für sich bekannt ist. Die zu behandelnden Werkstücke 24 werden mittels eines Fördersystems 32 durch den Behandlungstunnel 26 hindurch gefördert, wie es ebenfalls an und für sich bekannt ist und auf welches nicht weiter eingegangen werden muss.

Bei der Behandlungseinrichtung 18 kann es sich beispielsweise um einen Trockner 34 handeln, in dem zuvor lackierte Werkstücke 24 bzw. deren Lackierung getrocknet wird. Die Behandlungseinrichtung 18 kann aber auch insbesondere eine Lackierkabine 36 sein, was in Figur 1 durch zugehörige Lackierroboter 38 veranschaulicht ist, die mit gestrichelten Linien gezeigt sind, um die Alternative darzustellen. Wie eingangs erwähnt, kommen auch Abdunstkabinen, Kühlkabinen oder dergleichen mit jeweils einem Behandlungstunnel in Betracht.

Der Behandlungstunnel 26 weist einen oder mehrere Luftauslässe 40 und einen oder mehrere Lufteinlässe 42 auf, zwischen denen die Konditioniervorrichtung 10 angeordnet ist, so dass Abluft 16 aus dem Behandlungstunnel 26 angesaugt, durch die Konditioniervorrichtung 10 gefördert und nach erfolgter Konditionierung dem Behandlungstunnel 26 wieder als Prozessluft 44 in einem Kreislauf zugeführt werden kann, welche beim vorliegenden Ausführungsbeispiel somit das konditionierte gasförmige Prozessmedium 14 ist. Die zurückgegebene Prozessluft 44 wird bei einem Trockner 34 in an und für sich bekannter Art und Weise über nicht eigens dargestellte Düsen auf die zu behandelnden Werkstücke 24 geführt. Bei einer Lackierkabine 36 wird das konditionierte gasförmige Prozessmedium 14 in der Regel über ein Luftplenum an der Decke der Lackierkabine 36 in den Behandlungstunnel 26 geführt; dies ist an und für sich bekannt.

Auf diese Weise ist es möglich, in dem Behandlungstunnel 26 die für eine effektive Behandlung erforderliche Temperatur und Behandlungsbedingungen aufrechtzuerhalten. Bei einer nicht eigens gezeigten Abwandlung kann der Behandlungstunnel 26 auch in mehrere Tunnelabschnitte unterteilt sein, welche jeweils einen gesonderten Luftauslass und Lufteinlass aufweisen, die mit der Konditioniervorrichtung 10 verbunden sind. Gegebenenfalls kann auch jedem vorhandenem Tunnelabschnitt eine eigene Konditioniervorrichtung 10 zugeordnet sein, so dass in jedem Tunnelabschnitt unterschiedliche Temperaturen und Behandlungsbedingungen eingestellt werden können, wie dies jeweils für den Behandlungsvorgang am günstigsten ist.

Durch die Konditioniervorrichtung 10 werden insbesondere die Temperatur und die Feuchte des Prozessmediums 14 eingestellt. Bei einem Trockner 34 beispielsweise soll das Prozessmedium 14 bei höheren Temperaturen nur eine sehr geringe Feuchte haben.

Die Konditioniervorrichtung 10 umfasst ein Gehäuse 46 mit einer Eingangs-Anschlusseinrichtung 48 und einer Ausgangs-Anschlusseinrichtung 50, zwischen denen ein Strömungsweg für gasförmiges Medium 12 mit mehreren Konditionierungsstufen 52 ausgebildet ist. Die Strömungsrichtung in der Konditioniervorrichtung 10 ist somit von der Eingangs-Anschlusseinrichtung 48 zur Ausgangs-Anschlusseinrichtung 50 definiert.

Zwischen den einzelnen Konditionierungsstufen 52 sind Strömungsbereiche 54 angeordnet, die nur in Figur 1 mit einem Bezugszeichen versehen sind. Die Konditionierungsstufen 52 und die Strömungsbereiche 54 sind in der Regel in gesonderten Kammern untergebracht, die strömungstechnisch miteinander verbunden sind; dies ist hier jedoch nicht eigens gezeigt. Bei einer Abwandlung können auch einige oder alle Konditionierungsstufen 52 und Strömungsbereiche 54 ohne jeweiliges gesondertes Kammergehäuse in dem Gehäuse 46 untergebracht sein.

Die Konditioniervorrichtung 10 umfasst außerdem eine oder mehrere Ventilatoreinrichtungen 56, mittels welcher das zu konditionierende Medium 12 aus dem Behandlungstunnel 26 - und gegebenenfalls weitere Medien aus anderen Quellen - angesaugt und durch die Konditioniervorrichtung 10 hindurch gefördert wird. Beim vorliegenden Ausführungsbeispiel ist eine einzige solche Ventilatoreinrichtung 56 veranschaulicht.

Die Eingangs-Anschlusseinrichtung 48, die Ausgangs-Anschlusseinrichtung 50 und auch die Konditionierungsstufen 52, die Strömungsbereiche 54 und die Ventilatoreinrichtung 56 der Konditioniervorrichtung 10 können als Module ausgebildet sein, so dass die Abfolge von bestimmten Konditionierungsstufen 52 und die Anordnung und Anzahl von Strömungsbereichen 54 der Konditioniervorrichtung 10 weitgehend beliebig variiert werden und bei der Montage an die Anforderungen der Behandlungseinrichtung 18 angepasst werden kann.

Die Konditioniervorrichtung 10 ist derart eingerichtet, dass sie das gasförmige Medium 12 zumindest entfeuchtet.

Bei dem in den Figuren 1, 2 und 3 gezeigten Ausführungsbeispiel der Konditioniervorrichtung 10 sind beispielhaft sechs Konditionierungsstufen 52 vorhanden, die zwei Reinigungsstufen 58 und vier Temperierstufen 60 umfassen, die auch zur Entfeuchtung des gasförmigen Mediums 12 führen. In Strömungsrichtung umfassen die Konditionierungsstufen 52 eine Eingangs-Filtereinrichtung 58.1, eine Vorkühleinrichtung 60.1, eine Kühleinrichtung 60.2, einer Vorwärmeinrichtung 60.3, eine Heizeinrichtung 60.4 und eine Ausgangs-Filtereinrichtung 58.2. Die Ventilatoreinrichtung 56 ist bei diesem Ausführungsbeispiel zwischen der Heizeinrichtung 60.4 und der Ausgangs-Filtereinrichtung 58.2 angeordnet, kann jedoch auch an anderer Stelle positioniert sein. Ergänzend oder alternativ zu der Eingangs-Filtereinrichtung 58.1 oder der Ausgangs-Filtereinrichtung 58.2 können auch eine oder mehrere Filtereinrichtungen an anderer Stelle im Strömungsweg zwischen der Eingangs-Anschlusseinrichtung 48 und der Ausgangs-Anschlusseinrichtung 50 vorhanden sein.

Der in Figur 1 zu erkennende Luftauslass 40 des Behandlungstunnels 26 ist durch eine Strömungsleitung 62 mit der Eingangs-Anschlusseinrichtung 48 der Konditioniervorrichtung 10 verbunden, so dass das zu konditionierende gasförmige Medium 12 in die Konditioniervorrichtung 10 einströmen kann. In der Strömungsleitung 62 ist ein Ventil 64 angeordnet, so dass der Volumenstrom der Abluft 16 zur Eingangs-Anschlusseinrichtung 48 eingestellt werden kann.

Darüber hinaus ist die Eingangs-Anschlusseinrichtung 48 mit einer Frischluftleitung 66 verbunden, über welche der Konditioniervorrichtung 10 Frischluft 68 zugeführt werden kann. In der Frischluftleitung 66 ist ein Ventil 70 angeordnet, so dass auch der Volumenstrom der Frischluft 68 eingestellt werden kann. Zum Konditioniervorgang für das gasförmige Medium 12, d.h. vorliegend für die Abluft 16 aus dem Behandlungstunnel 26, zählt folglich auch, dass dem gasförmigen Medium 12 ein Anteil eines Zumischgases, im vorliegenden Fall also ein Anteil an Frischluft 68, zugemischt wird. Die Konditioniervorrichtung 10 wird stromab der Ventilatoreinrichtung 56 folglich in der Regel immer von einem Gemisch aus dem gasförmigen Medium 12 und Frischluft 68 durchströmt; der Einfachheit halber wird im Weiteren dennoch nur von dem gasförmigen Medium 12 gesprochen.

Die Ausgangs-Anschlusseinheit 50 der Konditioniervorrichtung 10 ist durch eine weitere Strömungsleitung 72 mit einem Ventil 74 mit dem oder den Lufteinlässen 42 der Behandlungseinrichtung 18 verbunden, durch welche das konditionierte Prozessmedium 14 zu dem Behandlungstunnel 26 strömen kann. Bei einer Abwandlung kann ein Anteil des konditionierten Prozessmediums 14 von oder vor der Ausgangs-Anschlusseinrichtung 50 abgezweigt und einer anderen Nutzung zugeführt werden.

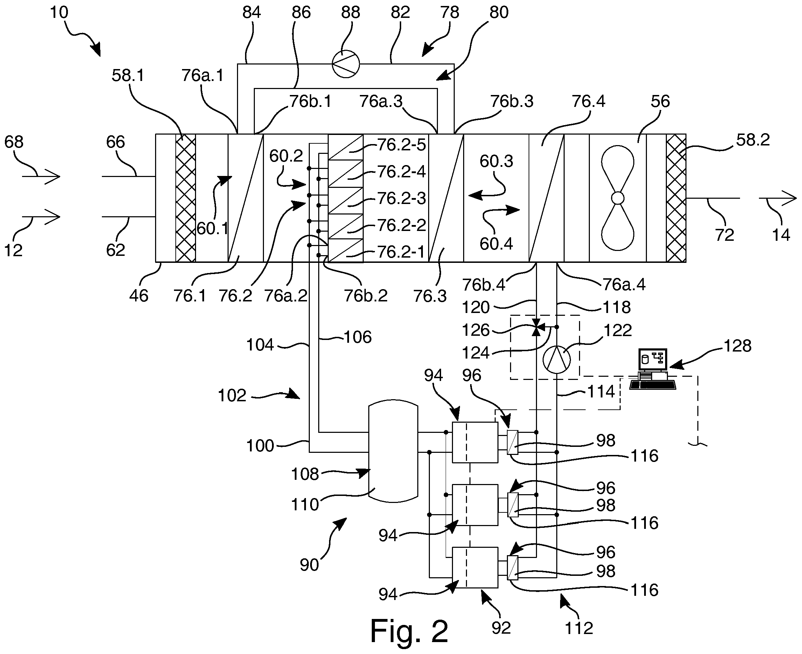

Im Weiteren wird die Konditioniervorrichtung 10 anhand von Figur 2 erläutert.

Die Temperierstufen 60 sind als Wärmetauscher 76 mit jeweils einem Einlass und einem Auslass für ein Arbeitsmedium konzipiert, wie es in den Figuren beispielhaft gezeigt ist. Dort sind ein Vorkühl-Wärmetauscher 76.1 bei der Vorkühleinrichtung 60.1, ein Kühl-Wärmetauschersystem 76.2 bei der Kühleinrichtung 60.2, ein Vorwärm-Wärmetauscher 76.3 bei der Vorwärmeinrichtung 60.3 und ein Heiz-Wärmetauscher 76.4 bei der Heizeinrichtung 60.4 veranschaulicht. Die jeweiligen Einlässe und Auslässe der Wärmetauscher für das jeweilige Arbeitsmedium sind mit 76a.1, 76b.1, 76a.2, 76b.2, usw. bezeichnet.

Während Vorkühleinrichtung 60.1, die Vorwärmeinrichtung 60.3 und die Heizeinrichtung 60.4 mit jeweils einem Wärmetauscher konzipiert sind, umfasst das Kühl-Wärmetauschersystem 76.2 der Kühleinrichtung 60.2 mehrere Kühl-Wärmetauscher, wobei bei den vorliegenden Ausführungsbeispielen fünf solche Kühl-Wärmetauscher 76.2-1, 76.2-2, 76.2-3, 76.2-4 und 76.2-5 gezeigt sind. Das Kühl-Wärmetauschersystem 76.2 kann aber auch weniger oder mehr als fünf Kühl-Wärmetauscher umfassen. Jeder dieser Kühl-Wärmetauscher 76.2-1, 76.2-2, 76.2-3, 76.2-4 und 76.2-5 hat einen Einlass 76a.2 und einen Auslass 76b.2, von denen der Übersichtlichkeit halber jeweils nur einer gekennzeichnet ist.

Bei einer nicht eigens gezeigten Abwandlung können auch die Vorkühleinrichtung 60.1, die Vorwärmeinrichtung 60.3 und die Heizeinrichtung 60.4 ebenfalls als Wärmetauschersysteme mit mehreren Wärmetauschern ausgebildet sein und in ihrem Konzept somit demjenigen des Kühl-Wärmetauschersystems 76.2 entsprechen.

Der Vorkühl-Wärmetauscher 76.1 und der Vorwärm-Wärmetauscher 76.3 sind Komponenten eines ersten Kreislaufverbundsystems 78. Bei diesem ersten Kreislaufverbundsystem 78 ist ein einziger Strömungskreislauf 80 ausgebildet, in welchem ein Arbeitsmedium 82 zwischen dem Vorkühl-Wärmetauscher 76.1 und dem Vorwärm-Wärmetauscher 76.3 zirkuliert. Hierfür sind der Einlass 76a.1 des Vorkühl-Wärmetauschers 76.1 über eine Fluidleitung 84 mit dem Auslass 76b.3 des Vorwärm-Wärmetauschers 76.3 und der Auslass 76b.1 der Vorkühl-Wärmetauschers 76.1 über eine Fluidleitung 86 mit dem Einlass 76a.3 des Vorwärm-Wärmetauschers 76.3 verbunden. In der Fluidleitung 84 ist eine Förderpumpe 88 angeordnet. Das Arbeitsmedium 82, bei dem es sich vorzugsweise um ein Glykol/Wasser-Gemisch mit 30 Vol.% Glykol handelt, wird dabei in einem kontinuierlichen Kreislauf durch den Vorkühl-Wärmetauscher 76.1 und den Vorwärm-Wärmetauscher 76.3 geführt.

Das Kühl-Wärmetauschersystem 76.2 und der Heiz-Wärmetauscher 76.4 sind Komponenten eines zweiten Kreislaufverbundsystems 90, welches ein Verbrennungsmotor-Wärmepumpensystem 92 mit wenigstens einer Wärmepumpe 94 umfasst. Beim vorliegenden Ausführungsbeispiel sind drei parallel geschaltete Wärmepumpen 94 gezeigt, es können alternativ nur eine oder zwei oder auch mehr als drei Wärmepumpen 94 vorhanden sein. Die erforderliche Anzahl der Wärmepumpen 94 hängt insbesondere von den Masseströmen der zu temperierenden Arbeitsmedien ab.

Jede Wärmepumpe 94 weist in an und für sich bekannter Art und Weise eine Verdampfereinheit, einer Verdichtereinheit, eine Kondensatoreinheit und eine Drosseleinheit auf, welche in einem Arbeitskreislauf angeordnet sind, durch den ein Arbeitsfluid geführt wird; diese Komponenten sind nicht eigens gezeigt.

Zum Antrieb der Verdichtereinheit der Wärmepumpe 94 umfasst diese einen Verbrennungsmotor 96, bei dem es sich beim vorliegenden Ausführungsbeispiel um einen Gasmotor 98 handelt. Die Wärmepumpe 94 ist also beim vorliegenden Ausführungsbeispiel eine Gasmotorwärmepumpe.

Alternativ kann als Verbrennungsmotor 96 auch ein Ölmotor eingesetzt werden. In diesem Fall ist die Wärmepumpe 94 eine Ölmotorwärmepumpe.

Die Wärmepumpe 94 dient zum Kühlen eines Kühl-Arbeitsmediums 100 in Form einer Sole, die nachfolgend ebenfalls mit dem Bezugszeichen 100 bezeichnet wird und in einem ersten Strömungskreislauf 102 des zweiten Kreisverbundsystems 90 zwischen der Wärmepumpe 94 und dem Kühl-Wärmetauscher 76.2 der Kühleinrichtung 60.2 zirkuliert. Bei der Sole 100 handelt es sich vorzugsweise um ein Gemisch aus Wasser und Glykolen, insbesondere Ethylenglykolen oder Propylenglykolen, mit zusätzlichen Korrosionsinhibitoren, wie es an und für sich bekannt ist. Der erste Strömungskreislauf 102 umfasst eine Vorlaufleitung 104, die von der Verdampferseite der Wärmepumpen 94 zu den Einlässen 76a.2 des Kühl-Wärmetauschersystems 76.2, 76.2-3, 76.2-4 und 76.2-5 der Kühleinrichtung 60.2 führt, und eine Rücklaufleitung 106 zwischen den Auslässen 76b.2 der Kühl-Wärmetauschers 76.2 und der Verdampferseite der Wärmepumpen 94. An den Einlässen 76a.2 ist jeweils eine nicht eigens gezeigte Förderpumpe vorhanden, so das der Zufluss der Sole 100 zu den einzelnen Kühl-Wärmetauschern 76.2-1, 76.2-2, 76.2-3, 76.2-4 und 76.2-5 jeweils individuell gesteuert werden kann.

Die Vorlaufleitung 104 und die Rücklaufleitung 106 sind in an und für sich bekannter Weise über eine Ausgleichseinrichtung 108 voneinander entkoppelt, um unterschiedlich hohe Umlaufströme in der Vorlaufleitung 104 und der Rücklaufleitung 106 auszugleichen. Hierfür ist eine hydraulische Weiche 110 vorgesehen.

Zwischen der Ausgleichseinrichtung 108 und den Wärmepumpen 94 ist in jeder zugehörigen Vorlaufleitung ebenfalls eine nicht eigens gezeigte Förderpumpe angeordnet, so dass der Zufluss der Sole 100 von jeder Wärmepumpe 94 in den ersten Strömungskreislauf 102 jeweils individuell gesteuert werden kann.

Das zweite Kreisverbundsystem 90 umfasst neben dem ersten Strömungskreislauf 102 einen zweiten Strömungskreislauf 112 für ein Heiz-Arbeitsmedium 114, in welchem dieses Heiz-Arbeitsmedium 114 zwischen dem Heiz-Wärmetauscher 76.4 und den jeweils vorhandenen Wärmepumpen 94 zirkuliert, wobei die Abwärme der Verbrennungsmotoren 96 auf das Heiz-Arbeitsmedium 114 übertragen wird. Zu diesem Zweck umfasst jede Wärmepumpe 94 einen Abwärme-Wärmetauscher 116, durch welchen der zweite Strömungskreislauf 112 führt. Bei dem Heiz-Arbeitsmedium 114 des zweiten Strömungskreislaufs 102 handelt es sich vorzugsweise wieder um ein Glykol/Wasser-Gemisch mit 30 Vol.% Glykol.

Durch den zweiten Strömungskreislauf 112 sind allgemein ausgedrückt Mittel ausgebildet, durch welche die Heizeinrichtung 60.4 die Abwärme der Verbrennungsmotoren 96 des Verbrennungsmotor-Wärmepumpensystems 92 zum Erwärmen des gasförmigen Mediums 12 nutzt.

Der zweite Strömungskreislauf 112 umfasst eine Vorlaufleitung 118, die von dem Abwärme-Wärmetauscher 116 zum Einlass 76a.4 des Heiz-Wärmetauschers 76.4 der Heizeinrichtung 60.4 führt, und eine Rücklaufleitung 120 zwischen dem Auslass 76b.4 des Heiz-Wärmetauschers 76.4 und dem Abwärme-Wärmetauscher 116. In der Vorlaufleitung 118 ist eine Förderpumpe 122 für das Heiz-Arbeitsmedium 114 angeordnet.

Die Vorlaufleitung 118 und die Rücklaufleitung 120 sind derart durch eine Zirkulationsleitung 124 miteinander verbunden, dass Heiz-Arbeitsmedium 114 aus der Vorlaufleitung 118 im Kreislauf wieder in die Rücklaufleitung 120 geführt werden kann. Die Zirkulationsleitung 124 geht stromauf des Heiz-Wärmetauschers 76.4 von der Vorlaufleitung 118 ab, so dass die Zirkulations-Rückführung des Heiz-Arbeitsmediums 114 in die Rücklaufleitung 120 erfolgt, bevor das Heiz-Arbeitsmedium 114 in den Heiz-Wärmetauscher 76.4 einströmt. Der Anteil des zurückzuführenden Heiz-Heiz-Arbeitsmediums 114, d.h. der Anteil des Heiz-Arbeitsmediums 114, der aus der Vorlaufleitung 118 in die Rücklaufleitung 120 strömt, kann mittels eines Ventils 126 eingestellt werden, welches beim vorliegenden Ausführungsbeispiel in der Rücklaufleitung 120 angeordnet ist.

Die Förderpumpe 122 und das Ventil 126 des zweiten Strömungskreislaufs 112 des zweiten Kreisverbundsystems 90 werden durch eine Steuereinrichtung 128 angesteuert, welche ebenfalls für die Ansteuerung des Wärmepumpensystems 92 zuständig ist. Auch die Förderpumpe 88 des ersten Kreislaufverbundsystems 78 sowie weitere vorhandene Förderpumpen und Ventile, die gegebenenfalls nicht eigens gezeigt sind, werden mit Hilfe der Steuereinrichtung 128 gesteuert. Beispielsweise zählen hierzu insbesondere die oben erläuterten Förderpumpen an den Einlässen 76a.2 des Kühl-Wärmetauschersystems 76.2.

Die in den Figuren 1 und 2 gezeigte Konditioniervorrichtung 10 funktioniert wie folgt, wobei die nachfolgend angegebenen Temperaturen lediglich zur Veranschaulichung dienen und beispielhaft Werte widerspiegeln, die in der Praxis bei einem Trockner 34 auftreten können, in dem lackierte Fahrzeugkarosserien getrocknet werden. Die angegebenen Temperaturen spiegeln insbesondere die Verhältnisse wider, in denen die auftretenden Temperaturen zueinander stehen können. Die bei einer konkreten Behandlungseinrichtung 18 tatsächlich auftretenden Temperaturen hängen von den individuellen Betriebsparametern der Behandlungseinrichtung 18 und der zugehörigen Konditioniervorrichtung 10 ab.

Die Abluft 16 aus dem Behandlungstunnel 26 hat eine Temperatur T₁=65°C, wogegen die Frischluft 68 in der Frischluftleitung 66 mit einer Temperatur von T₂=32°C geführt wird. Die Strömungsverhältnisse von Abluft 16 und Frischluft 68 sind so eingestellt, dass das durch Vermischen im Bereich der Eingangs-Filtereinrichtung 58.1 entstehende gasförmige Medium 12 eine Temperatur T₃=56°C aufweist.

Das gasförmige Medium 12 durchströmt den Vorkühl-Wärmetauscher 76.1 der Vorkühleinrichtung 60.1, welchem das Arbeitsmedium 82 des Strömungskreislaufs 80 des ersten Kreislaufverbundsystems 78 mit einer Temperatur T₄=8°C zugeführt wird.

Nach Durchströmen der Vorkühleinrichtung 60.1 hat das gasförmige Medium 12 eine Temperatur von T₅=17°C, wobei das Arbeitsmedium 82 den Vorkühl-Wärmetauscher 76.1 mit einer Temperatur T₆=47°C verlässt.

Das gasförmige Medium 12 gelangt zur Kühleinrichtung 60.2, wobei die Sole 100 des ersten Strömungskreislaufs 102 des zweiten Kreislaufverbundsystems 90 mit einer Temperatur T₇=-4°C in dessen Kühl-Wärmetauschersystem 76.2 einströmt. Das gasförmige Medium 12 wird durch die Kühleinrichtung 60.2 auf eine Temperatur von T₈=-2°C abgekühlt, wobei die Sole 100 die Kühl-Wärmetauscher 76.2-1, 76.2-2, 76.2-3, 76.2-4 und 76.2-5 mit einer Temperatur T₉=+2°C verlässt. Die Sole 100 wird durch das Wärmepumpensystem 92 wieder auf die Temperatur T₇=-4°C abgekühlt.

Nach Durchströmen der Kühleinrichtung 60.2 hat das gasförmige Medium 12 eine Temperatur T₁₀=-2°C. Die Abkühlung führt zu einem Auskondensieren der von dem gasförmigen Medium 12 mitgeführten Feuchtigkeit. Zum Auffangen des auskondensierten Wassers sind entsprechende Auffangeinrichtungen vorhanden, die an und für sich bekannt und daher nicht eigens gezeigt sind.

Das gasförmige Medium 12 gelangt nun zur Vorwärmeinrichtung 60.3, in deren Vorwärm-Wärmetauscher 76.3 das Arbeitsmedium 82 des ersten Kreislaufverbundsystems 80 mit der oben genannten Temperatur T₆=47°C einströmt und mit der Temperatur T₄=8°C verlässt und zur Vorkühleinrichtung 60.1 strömt. Das gasförmige Medium 12 verlässt die Vorwärmeinrichtung 60.3 mit einer Temperatur T₁₁=37°C und strömt weiter zur Heizeinrichtung 60.4. Das Heiz-Arbeitsmedium 114 im zweiten Strömungskreislauf 112 des zweiten Kreislaufverbundsystems 90 wird mittels der Abwärme-Wärmetauscher 116 so erwärmt, dass es mit einer Temperatur T₁₂= 60°C in den Heiz-Wärmetauscher 76.4 einströmt. Das Heiz-Arbeitsmedium 114 verlässt den Heiz-Wärmetauscher 76.4 mit einer Temperatur T₁₃=40°C.

Das gasförmige Medium 12 hat nach Durchströmen des Heiz-Wärmetauschers 76.4 eine Temperatur T₁₄=51°C, durchströmt die Ausgangsfilter-Einrichtung 58.2 und verlässt die Konditioniereinrichtung 10 als konditioniertes Prozessgas 14, welches entsprechend ebenfalls die Temperatur T₁₄=51°C aufweist und in den Behandlungstunnel 26 zurückgeführt wird.

Im Laufe des Betriebs der Konditioniervorrichtung 10 kann es vorkommen, dass die Kühl-Wärmetauscher 76.2-1, 76.2-2, 76.2-3, 76.2-4 und 76.2-5 des Kühl-Wärmetauschersystems 76.2 vereisen, da diesen die Sole 100 mit einer Temperatur unter 0°C zugeführt wird.

Daher können Maßnahmen angebracht sein, um die Kühl-Wärmetauscher 76.2-1, 76.2-2, 76.2-3, 76.2-4 und 76.2-5 selektiv enteisen zu können.

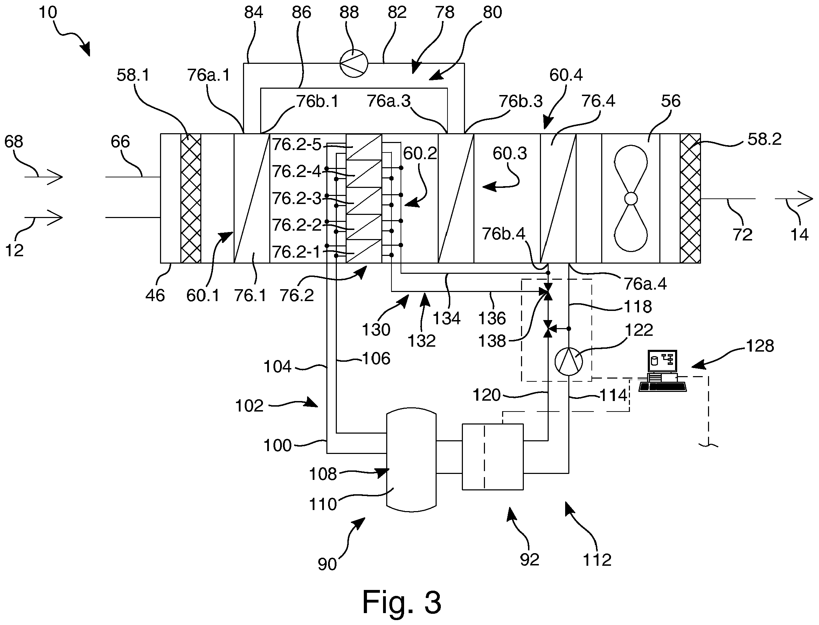

Figur 3 zeigt eine entsprechende Abwandlung, bei welcher die Kühleinrichtung 60.2 eine Enteiseinrichtung 130 umfasst, mittels welcher ein oder mehrere Kühl-Wärmetauscher 76.2-1, 76.2-2, 76.2-3, 76.2-4 und 76.2-5 des Kühlwärmetauschersystems 76.2 selektiv enteist werden können. In Figur 3 ist das Wärmepumpensystem 92 der Einfachheit halber nur schematisch ohne die in Figur 2 gezeigten Komponenten veranschaulicht.

Die Enteiseinrichtung 130 umfasst eine Umwälzleitung 132 mit einer Hinleitung 134 und einer Rückleitung 136 , deren Eingang und Ausgang mit dem zweiten Strömungskreislauf 112 des zweiten Kreislaufverbundsystems 90, beim vorliegenden Ausführungsbeispiel mit dessen Rücklaufleitung 120, verbunden ist und die zu den einzelnen Kühl-Wärmetauschern 76.2-1, 76.2-2, 76.2-3, 76.2-4 und 76.2-5 des Kühl-Wärmetauschersystems 76.2 führt, so dass Heiz-Arbeitsmedium 114, welches aus dem Heiz-Wärmetauscher 76.4 ausströmt, durch die Kühl-Wärmetauscher 76.2-1, 76.2-2, 76.2-3, 76.2-4 und 76.2-5 geführt werden kann. Der Zustrom von Heiz-Arbeitsmedium 114 auf dem Wege der Umwälzleitung 132 durch die Kühl-Wärmetauscher 76.2-1, 76.2-2, 76.2-3, 76.2-4 und 76.2-5 wird durch nicht eigens gezeigte Ventile gesteuert, die von der Steuereinrichtung 128 angesteuert werden. Die Rückleitung 136 der Umwälzleitung 132 mündet über ein Ventil 138 in die Rücklaufleitung 120 des zweiten Strömungskreislaufs 112 des zweiten Kreislaufverbundsystems 90.

Das Heiz-Arbeitsmedium 114 hat in der Rücklaufleitung 120 die oben erläuterte Temperatur T₁₃=40°C und gelangt auch mit etwa dieser Temperatur zum Kühl-Wärmetauschersystem 76.2. Wenn der Zugang zu einem der Kühl-Wärmetauscher 76.2-1, 76.2-2, 76.2-3, 76.2-4 oder 76.2-5 freigegeben wird, erwärmt sich der jeweilige Kühl-Wärmetauscher 76.2-1, 76.2-2, 76.2-3, 76.2-4 und 76.2-5 und wird auf diese Weise enteist.

Bei dem Ausführungsbeispiel nach Figur 3 beträgt die Temperatur, mit der die Sole 100 in das Kühl-Wärmetauschersystem 76.2 eintritt, T₇=-2°C. Die Austrittstemperatur, mit welcher die Sole 100 das Kühl-Wärmetauschersystem 76.2 verlässt, liegt in diesem Fall bei T₉=+3°C.

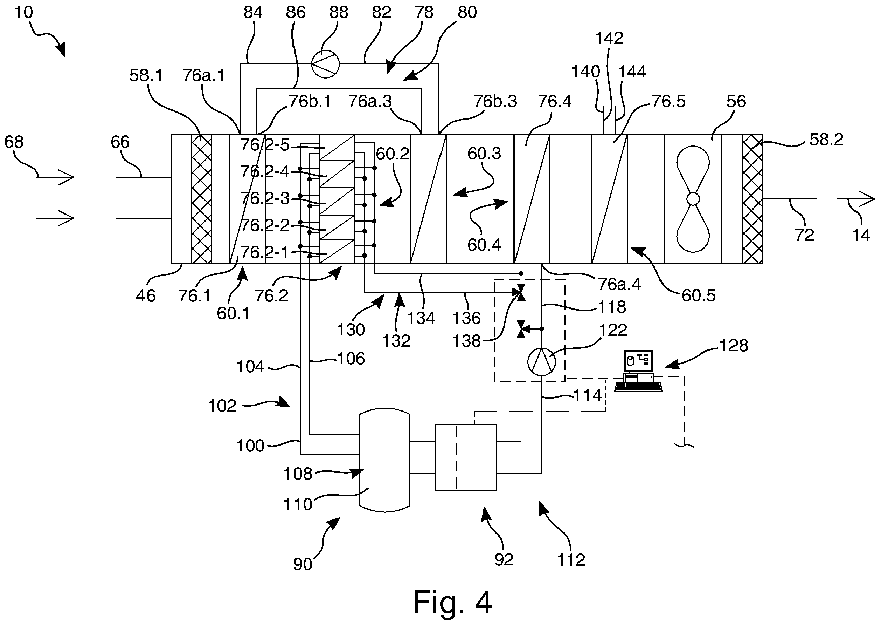

Figur 4 zeigt ein weiteres Ausführungsbeispiel der Konditioniervorrichtung 10, bei dem diese in Strömungsrichtung hinter der Heizeinrichtung 60.4 eine weitere Temperierstufe 60 in Form einer weiteren Heizeinrichtung 60.5 mit einem weiteren Heiz-Wärmetauscher 76.5 umfasst. Dieser wird über eine Zuführleitung 140 mit einem Arbeitsmedium 142 gespeist, welches mit einer Temperatur T₁₅=90°C in den weiteren Heiz-Wärmetauscher 76.5 einströmt. Das Arbeitsmedium 142 verlässt den weiteren Heiz-Wärmetauscher 76.5 über eine Abführleitung 144 mit einer Temperatur T₁₆=70°C.

Das gasförmige Medium 12 gelangt mit der Temperatur T₁₄=51°C zu der weiteren Heizeinrichtung 60.5 und hat hiernach eine Temperatur T₁₇=65°C. Somit hat auch konditionierte Prozessgas 14 diese Temperatur T₁₇=65°C, welches die Konditioniervorrichtung 10 verlässt. In diesem Fall hat das rückgeführte konditionierte Prozessgas 14 folglich die gleiche Temperatur, wie das gasförmige Medium 12, welches mit einer Temperatur T₁=65°C aus dem Behandlungstunnel 26 abgeführt wird.

## Patentansprüche

1. Konditioniervorrichtung zum Konditionieren eines gasförmigen Mediums (12) zu einem konditionierten gasförmigen Prozessmedium (14), mit
einer Eingangs-Anschlusseinrichtung (48) und einer Ausgangs-Anschlusseinrichtung (50), zwischen denen ein Strömungsweg für gasförmiges Medium (12) mit wenigstens einer Heizeinrichtung (60.4) ausgebildet ist, mittels welcher das gasförmige Medium (12) erwärmbar ist,
**dadurch gekennzeichnet, dass**
die Heizeinrichtung (60.4) derart mit einem Verbrennungsmotor-Wärmepumpensystem (92) mit wenigstens einem Verbrennungsmotor (96) verbunden ist, dass die Abwärme des Verbrennungsmotors (96) zum Erwärmen des gasförmigen Mediums (12) nutzbar ist.

2. Konditioniervorrichtung nach Anspruch 1, **dadurch gekennzeichnet, dass** ein Strömungskreislauf (112) für ein Heiz-Arbeitsmedium (114) vorgesehen ist, in welchem das Heiz-Arbeitsmedium (114) zwischen wenigstens einem Heiz-Wärmetauscher (76.4) der Heizeinrichtung (60.4) und dem Verbrennungsmotor-Wärmepumpensystem (92) zirkuliert, wobei die Abwärme des Verbrennungsmotors (96) mittels eines Abwärme-Wärmetauschers (116) auf das Heiz-Arbeitsmedium (114) übertragen wird.

3. Konditioniervorrichtung nach Anspruch 2, **dadurch gekennzeichnet, dass** der Strömungskreislauf (112) eine Vorlaufleitung (118), die von dem Abwärme-Wärmetauscher (116) zu dem Heiz-Wärmetauscher (76.4) der Heizeinrichtung (60.4) führt, und eine Rücklaufleitung (120) zwischen dem Heiz-Wärmetauscher (76.4) und dem Abwärme-Wärmetauscher (116) umfasst, wobei die Vorlaufleitung (118) und die Rücklaufleitung (120) derart durch eine Zirkulationsleitung (124) miteinander verbunden sind, dass Heiz-Arbeitsmedium (114) aus der Vorlaufleitung (118) im Kreislauf wieder in die Rücklaufleitung (120) führbar ist.

4. Konditioniervorrichtung nach Anspruch 3, **dadurch gekennzeichnet, dass** die Zirkulationsleitung (124) stromauf des Heiz-Wärmetauschers (76.4) von der Vorlaufleitung (118) abgeht.

5. Konditioniervorrichtung nach Anspruch 3 oder 4, **dadurch gekennzeichnet, dass** ein Ventil (126) vorgesehen ist, durch welches der Anteil des Heiz-Arbeitsmediums (114) einstellbar ist, der aus der Vorlaufleitung (118) in die Rücklaufleitung (120) strömt.

6. Konditioniervorrichtung nach einem der Ansprüche 1 bis 5, **dadurch gekennzeichnet, dass**
a) in dem Strömungsweg für gasförmiges Medium (12) wenigstens eine Kühleinrichtung (60.2) ausgebildet ist, mittels welcher das gasförmige Medium (12) abkühlbar ist und welche insbesondere stromauf der Heizeinrichtung (60.4) angeordnet ist;
b) die Kühleinrichtung (60.2) derart mit dem Verbrennungsmotor-Wärmepumpensystem (92) verbunden ist, dass ein durch das Verbrennungsmotor-Wärmepumpensystem (92) abgekühltes Kühl-Arbeitsmedium (100) zum Kühlen des gasförmigen Mediums (12) nutzbar ist.

7. Konditioniervorrichtung nach Anspruch 6, **dadurch gekennzeichnet, dass** ein Strömungskreislauf (102) vorgesehen ist, in welchem das Kühl-Arbeitsmedium (100) zwischen einem Kühl-Wärmetauschersystem (76.2) der Kühleinrichtung (60.2), welches einen oder mehrere Kühl-Wärmetauscher (76.2-1, 76.2-2, 76.2-3, 76.2-4, 76,2-5) umfasst, und dem Verbrennungsmotor-Wärmepumpensystem (92) zirkuliert.

8. Konditioniervorrichtung nach Anspruch 7, **dadurch gekennzeichnet, dass** die Kühleinrichtung (60.2) eine Enteiseinrichtung (130) umfasst, mittels welcher ein oder mehrere Kühl-Wärmetauscher (76.2-1, 76.2-2, 76.2-3, 76.2-4, 76.2-5) des Kühl-Wärmetauschersystems (76.2) selektiv enteisbar sind.

9. Konditioniervorrichtung nach Anspruch 8 unter Rückbezug auf Anspruch 2 oder 3, **dadurch gekennzeichnet, dass** die Enteiseinrichtung (130) eine Umwälzleitung (132) umfasst, welche mit dem Strömungskreislauf (112) für das Heiz-Arbeitsmedium (114) gemäß Anspruch 2 oder 3 verbunden ist und die zu einem oder mehreren Kühl-Wärmetauschern (76.2-1, 76.2-2, 76.2-3, 76.2-4, 76.2-5) des Kühl-Wärmetauschersystems (76.2) führt.

10. Konditioniervorrichtung nach einem der Ansprüche 1 bis 9, **dadurch gekennzeichnet, dass** im Strömungsweg des gasförmigen Mediums (12) außerdem eine Vorkühleinrichtung (60.1) ausgebildet ist, die stromauf der Heizeinrichtung (60.4) und bei Rückbezug auf einen der Ansprüche 6 bis 9 stromauf der Kühleinrichtung (60.2) angeordnet ist, und/oder eine Vorwärmeinrichtung (60.3) ausgebildet ist, die stromauf der Heizeinrichtung (60.4) angeordnet ist, und/oder eine weitere Heizeinrichtung (60.5) ausgebildet ist, die stromab der Heizeinrichtung (60.4) angeordnet ist.

11. Anlage zum Behandeln von Werkstücken (24), insbesondere zum Trocknen oder Beschichten von Werkstücken (24) mit einer Konditioniervorrichtung (10) zum Konditionieren eines gasförmigen Mediums (12) zu einem konditionierten gasförmigen Prozessmedium (14), **dadurch gekennzeichnet, dass** die Konditioniervorrichtung (10) eine Konditioniervorrichtung (10) nach einem der Ansprüche 1 bis 10 ist.

12. Verfahren zum Betreiben einer Konditioniervorrichtung (10) zum Konditionieren eines gasförmigen Mediums (12) zu einem konditionierten gasförmigen Prozessmedium (14), mit
einer Eingangs-Anschlusseinrichtung (48) und einer Ausgangs-Anschlusseinrichtung (50), zwischen denen ein Strömungsweg für gasförmiges Medium (12) mit wenigstens einer Heizeinrichtung (60.4) ausgebildet ist, mittels welcher das gasförmige Medium (12) erwärmbar ist,
**dadurch gekennzeichnet, dass**
die Heizeinrichtung (60.4) die Abwärme eines Verbrennungsmotors (96) eines Verbrennungsmotor-Wärmepumpensystems (92) zum Erwärmen des gasförmigen Mediums (12) nutzt.

13. Verfahren nach Anspruch 12, **dadurch gekennzeichnet, dass** ein Heiz-Arbeitsmedium (114) in einem Strömungskreislauf (112) für das Heiz-Arbeitsmedium (114) zwischen wenigstens einem Heiz-Wärmetauscher (76.4) der Heizeinrichtung (60.4) und dem Verbrennungsmotor-Wärmepumpensystem (92) zirkuliert wird, wobei die Abwärme des Verbrennungsmotors (96) mittels eines Abwärme-Wärmetauschers (116) auf das Heiz-Arbeitsmedium (114) übertragen wird.

14. Verfahren nach Anspruch 13, **dadurch gekennzeichnet, dass** der Strömungskreislauf (112) eine Vorlaufleitung (118), die von dem Abwärme-Wärmetauscher (116) zu dem Heiz-Wärmetauscher (76.4) der Heizeinrichtung (60.4) führt, und eine Rücklaufleitung (120) zwischen dem Heiz-Wärmetauscher (76.4) und dem Abwärme-Wärmetauscher (116) umfasst, wobei die Vorlaufleitung (118) und die Rücklaufleitung (120) durch eine Zirkulationsleitung (124) miteinander verbunden sind und Heiz-Arbeitsmedium (114) aus der Vorlaufleitung (118) im Kreislauf wieder in die Rücklaufleitung (120) geführt wird.

15. Verfahren nach Anspruch 14, **dadurch gekennzeichnet, dass** die Zirkulationsleitung (124) stromauf des Heiz-Wärmetauschers (76.4) von der Vorlaufleitung (118) abgeht.

16. Verfahren nach Anspruch 14 oder 15, **dadurch gekennzeichnet, dass** der Anteil des Heiz-Arbeitsmediums (114), der aus der Vorlaufleitung (118) in die Rücklaufleitung (120) strömt, mittels eines Ventils (126) eingestellt wird.

17. Verfahren nach einem der Ansprüche 12 bis 16, **dadurch gekennzeichnet, dass**
a) in dem Strömungsweg für gasförmiges Medium (12) wenigstens eine Kühleinrichtung (60.2) ausgebildet ist, mittels welcher das gasförmige Medium (12) abgekühlt wird und welche insbesondere stromauf der Heizeinrichtung (60.4) angeordnet ist;
b) die Kühleinrichtung (60.2) mit dem Verbrennungsmotor-Wärmepumpensystem (92) verbunden ist und ein durch das Verbrennungsmotor-Wärmepumpensystem (92) abgekühltes Kühl-Arbeitsmedium (100) zum Kühlen des gasförmigen Mediums (12) genutzt wird.

18. Verfahren nach Anspruch 17, **dadurch gekennzeichnet, dass** das Kühl-Arbeitsmedium (100) in einem Strömungskreislauf (102) zwischen einem Kühl-Wärmetauschersystem (76.2) der Kühleinrichtung (60.2), welches einen oder mehrere Kühl-Wärmetauscher (76.2-1, 76.2-2, 76.2-3, 76.2-4, 76,2-5) umfasst, und dem Verbrennungsmotor-Wärmepumpensystem (92) zirkuliert.

19. Verfahren nach Anspruch 18, **dadurch gekennzeichnet, dass** ein oder mehrere Kühl-Wärmetauscher (76.2-1, 76.2-2, 76.2-3, 76.2-4, 76.2-5) des Kühl-Wärmetauschersystems (76.2) mittels einer Enteiseinrichtung (130) selektiv enteist werden.

20. Verfahren nach Anspruch 19 unter Rückbezug auf Anspruch 13 oder 14, **dadurch gekennzeichnet, dass** die Enteiseinrichtung (130) eine Umwälzleitung (132) umfasst, welche mit dem Strömungskreislauf (112) für das Heiz-Arbeitsmedium (114) gemäß Anspruch 2 oder 3 verbunden ist und die zu einem oder mehreren Kühl-Wärmetauschern (76.2-1, 76.2-2, 76.2-3, 76.2-4, 76.2-5) des Kühl-Wärmetauschersystems (76.2) führt.

21. Verfahren nach einem der Ansprüche 12 bis 20, **dadurch gekennzeichnet, dass** das gasförmigen Mediums (12) auf seinem Strömungsweg außerdem durch eine Vorkühleinrichtung (60.1) vorgekühlt wird, die stromauf der Heizeinrichtung (60.4) und bei Rückbezug auf einen der Ansprüche 6 bis 9 stromauf der Kühleinrichtung (60.2) angeordnet ist, und/oder durch eine Vorwärmeinrichtung (60.3) vorgewärmt wird, die stromauf der Heizeinrichtung (60.4) angeordnet ist, und/oder durch eine weitere Heizeinrichtung (60.5) geheizt wird, die stromab der Heizeinrichtung (60.4) angeordnet ist.
